# FASCICULE DE BREVET EUROPEEN

(11) **EP 2 420 707 B1**
(45) Date de publication et mention de la délivrance du brevet: **29.05.2013**
(21) Numéro de dépôt: 11176665.5
(22) Date de dépôt: 05.08.2011
(51) Int. Cl.: F16J 15/32, B62D 1/16

(54) **Ensemble pour un système de direction d'un véhicule**
Einheit für ein Lenksystem eines Fahrzeugs
Assembly for a steering system of a vehicle

(30) Priorité: 17.08.2010 FR 1056638
(43) Date de publication de la demande: 22.02.2012
(73) Titulaire: Jtekt Europe, 69540 Irigny (FR)
(72) Inventeur: De Araujo, Christophe, 01100 Oyonnax (FR); Fauritte, François, 69008 Lyon (FR); Rey, Laurent, 69100 Villeurbanne (FR); Monnet, Roch, 69126 Brindas (FR); Pauloin, Frédéric, 69560 Saint-Romain-en-Gal (FR); Plataret, Nicolas, 69630 Chaponost (FR)
(74) Mandataire: Chevalier, Renaud Philippe

(56) Documents cités:
- EP-A1- 0 557 579
- EP-A2- 0 385 635
- FR-A1- 2 857 324
- US-A1- 2006 169 525

## Description

La présente invention se rapporte à un ensemble pour un système de direction d'un véhicule, notamment de type direction assistée électrique.

US 2006/169 525 A divulgue un ensemble selon le préambule de la revendication 1.

Un ensemble pour un système de direction d'un véhicule comporte classiquement :
- un carter présentant au moins une ouverture,
- un arbre d'entrée monté rotatif sur le carter, et présentant une partie dite externe destinée à recevoir une colonne de direction et une partie dite interne engagée dans le carter à travers l'ouverture du carter,
- un organe d'étanchéité monté en contact autour de la partie interne de l'arbre d'entrée et en contact avec le carter de manière à assurer l'étanchéité de l'ouverture du carter,
- un organe de guidage en rotation de l'arbre d'entrée situé à l'intérieur du carter.

Un premier ensemble connu de l'état de la technique utilise :
- un organe de guidage réalisé sous la forme d'un roulement, et monté serré sur le carter et/ou sur la partie interne de l'arbre d'entrée,
- un organe d'étanchéité réalisé sous la forme d'un joint à lèvre indépendant de l'organe de guidage.

Un tel premier ensemble de l'état de la technique présente des frottements et/ou des transmissions de bruits et de vibrations élevées selon que l'organe de guidage est monté serré sur le carter et/ou sur la partie interne de l'arbre d'entrée.

En outre, un deuxième ensemble connu de l'état de la technique utilise :
- un organe de guidage réalisé sous la forme d'un pallier lisse, et monté serré sur le carter et/ou sur la partie interne de l'arbre d'entrée,
- un organe d'étanchéité réalisé sous la forme d'un joint à lèvre indépendant de l'organe de guidage.

De même, un tel deuxième ensemble de l'état de la technique présente des frottements et/ou des transmissions de bruits et de vibrations élevées selon que l'organe de guidage est monté serré sur le carter et/ou sur la partie interne de l'arbre d'entrée.

La présente invention vise à remédier en tout ou partie aux inconvénients précités et concerne un ensemble pour un système de direction d'un véhicule, notamment de type direction assistée électrique, l'ensemble comportant :
- un carter présentant au moins une ouverture,
- un arbre d'entrée monté rotatif sur le carter, et présentant une partie dite externe destinée à recevoir une colonne de direction et une partie dite interne engagée dans le carter à travers l'ouverture du carter,
- un organe d'étanchéité monté en contact autour de la partie interne de l'arbre d'entrée et en contact avec le carter de manière à assurer l'étanchéité de l'ouverture du carter,
- un organe de guidage en rotation de l'arbre d'entrée situé à l'intérieur du carter, et
remarquable en ce que l'organe de guidage est monté solidaire de l'organe d'étanchéité, et en ce que l'organe de guidage est conformé pour délimiter un premier jeu radial avec le carter et un second jeu radial avec l'arbre d'entrée.

Le fait que l'organe de guidage est monté solidaire de l'organe d'étanchéité et que l'organe d'étanchéité est maintenu en position entre le carter et la partie interne de l'arbre de l'entrée par contact permet à l'organe de guidage de s'affranchir d'un maintien en position par lui-même sur le carter et/ou l'arbre d'entrée.

Ainsi, l'organe de guidage est rendu indépendant du carter et de l'arbre d'entrée. Cette indépendance permet d'envisager une géométrie spécifique de l'organe de guidage pour délimiter un premier jeu radial avec le carter et un second jeu radial avec l'arbre d'entrée.

Dans la suite, on entendra par « effort radial » l'effort radial subi par l'arbre d'entrée lorsque la colonne de direction est manoeuvrée. L'effort radial est dû au mouvement d'un organe de sortie, tel qu'un pignon, sur la crémaillère de direction, l'organe de sortie étant relié à l'arbre d'entrée.

Ainsi, en cas d'effort radial nul, c'est-à-dire lorsque la colonne de direction n'est pas manoeuvrée, un tel ensemble selon l'invention permet de :
- s'affranchir des frottements entre l'organe de guidage et le carter par le premier jeu radial,
- s'affranchir des transmissions de bruits et de vibrations élevées entre l'organe de guidage et l'arbre d'entrée par le second jeu radial.

En outre, en cas de faible effort radial, le second jeu radial devient nul et l'organe de guidage est conformé pour que le premier jeu radial soit non nul. Ainsi, un tel ensemble selon l'invention permet de s'affranchir des frottements entre l'organe de guidage et le carter par le premier jeu radial. La transmission d'effort radial de l'arbre d'entrée vers le carter s'effectue par l'intermédiaire de l'organe d'étanchéité.

Enfin, en cas de fort effort radial, le premier jeu radial et le second jeu radial deviennent nuls. La transmission d'effort radial de l'arbre d'entrée vers le carter s'effectue à la fois par l'organe de guidage et l'organe d'étanchéité. Ainsi, un tel ensemble selon l'invention permet de réduire le risque de déformation permanente de l'organe d'étanchéité en répartissant l'effort radial sur l'organe de guidage et sur l'organe d'étanchéité.

Dans un mode de réalisation, l'organe de guidage présente au moins un épaulement annulaire venant en appui sur l'organe d'étanchéité, l'épaulement annulaire présentant une dimension radiale délimitant le premier jeu radial.

Ainsi, le fait de munir l'organe de guidage d'un épaulement annulaire permet à la fois de :
- définir aisément une zone d'appui sur l'organe d'étanchéité permettant d'améliorer la stabilité de l'organe de guidage,
- moduler aisément le premier jeu radial en modifiant la dimension radiale de l'épaulement.

Selon un mode de réalisation, l'organe de guidage est annulaire, et l'organe de guidage présente un diamètre intérieur délimitant le second jeu radial.

Selon une forme d'exécution, l'organe d'étanchéité comporte :
- un corps de joint monté en contact contre le carter,
- au moins une lèvre d'étanchéité montée en contact autour de la partie interne de l'arbre d'entrée,
et l'organe de guidage est monté sur le corps de joint.

Avantageusement, l'organe de guidage est réalisé dans une matière amortissante, de préférence une matière plastique élastique.

Ainsi, en cas de fort effort radial, l'organe de guidage permet d'absorber une partie des vibrations transmises au carter par l'arbre d'entrée.

Avantageusement, l'organe d'étanchéité est réalisé dans une matière amortissante, de préférence une matière plastique élastique.

Ainsi, en cas de faible et de fort effort radial, l'organe d'étanchéité permet d'absorber une partie des vibrations transmises au carter par l'arbre d'entrée.

D'autres caractéristiques et avantages apparaîtront dans la description qui va suivre d'un mode de réalisation d'un ensemble pour un système de direction d'un véhicule selon l'invention, donné à titre d'exemple non limitatif, en référence aux dessins annexés dans lesquels :
- la figure 1 est une vue en coupe longitudinale d'un ensemble selon l'invention,
- la figure 2 est une vue à l'échelle agrandie de l'ensemble illustré à la figure 1.

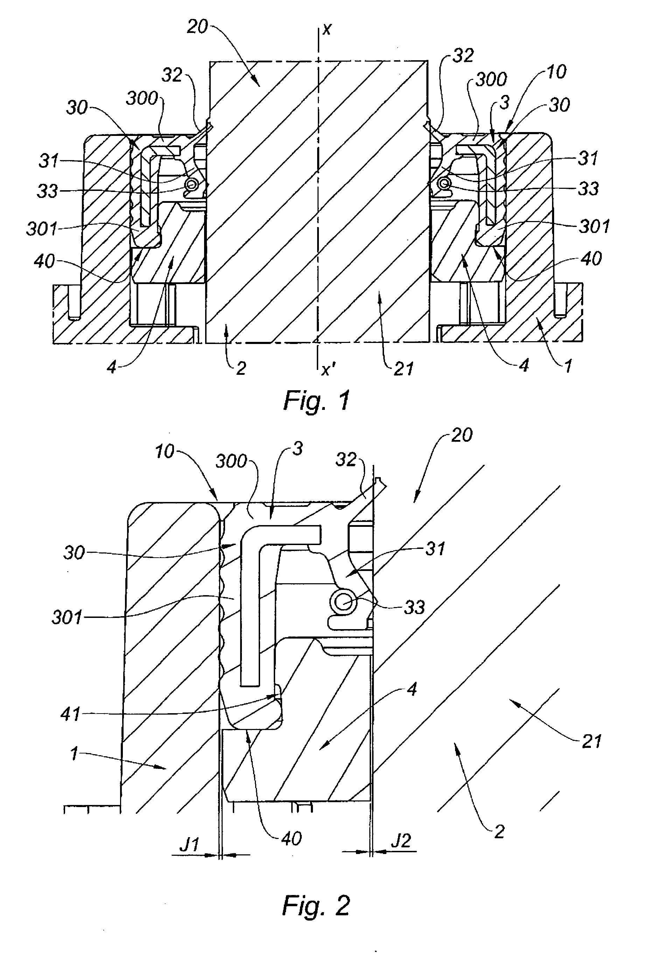

L'ensemble illustré aux figures 1 et 2 comporte :
- un carter 1 présentant une ouverture 10 sensiblement circulaire,
- un arbre d'entrée 2 monté rotatif sur le carter 1 autour d'un axe X'-X, et présentant une partie externe 20 destinée à recevoir une colonne de direction (non représentée) et une partie interne 21 engagée dans le carter 1 à travers l'ouverture 10 du carter 1,
- un organe d'étanchéité 3 monté en contact autour de la partie interne 21 de l'arbre d'entrée 2 et en contact avec le carter 1 de manière à assurer l'étanchéité de l'ouverture 10 du carter 1,
- un organe de guidage 4 en rotation de l'arbre d'entrée 2 situé à l'intérieur du carter 1.

L'organe de guidage 4 est monté solidaire de l'organe d'étanchéité 3. L'organe de guidage 4 est conformé pour délimiter un premier jeu radial J1 avec le carter 1 et un second jeu radial J2 avec l'arbre d'entrée 2.

Il est à noter que la représentation du premier jeu radial J1 et du second jeu radial J2 à la figure 2 par des flèches à pointe double est volontairement agrandie pour des raisons de lisibilité.

Plus précisément, l'organe d'étanchéité 3 comporte :
- un corps de joint 30 monté en contact contre le carter 1,
- une lèvre d'étanchéité 31 montée en contact autour de la partie interne 21 de l'arbre d'entrée 2,
- une lèvre racleuse 32 montée en contact autour de la partie externe 20 de l'arbre d'entrée 2.

Ainsi, l'organe d'étanchéité 3 forme un joint à lèvres.

Le corps de joint 30 présente une section longitudinale sensiblement en forme de « L » comprenant une petite branche 300 et une grande branche 301. Par « longitudinale », on entend une direction s'étendant parallèlement à l'axe X'-X. La grande branche 301 du « L » du corps de joint 30 est montée en contact contre le carter 1. La petite branche 300 du « L » du corps de joint 30 est équipée de la lèvre d'étanchéité 31 et de la lèvre racleuse 32.

L'organe d'étanchéité 3 comporte en outre un ressort annulaire 33 conformé pour maintenir en pression la lèvre d'étanchéité 31 en contact autour de la partie interne 21 de l'arbre d'entrée 2.

L'organe de guidage 4 est réalisé sous la forme d'une bague. L'organe de guidage 4 est monté sur la grande branche 301 du « L » du corps de joint 30. L'organe de guidage 4 présente un épaulement annulaire 40 venant en appui sur la grande branche 301 du « L » du corps de joint 30. L'épaulement annulaire 40 présente une dimension radiale délimitant le premier jeu radial J1. L'organe de guidage 4 présente une surface extérieure 41 oblique (mieux visible à la figure 2) conçue pour coopérer avec la grande branche 301 du « L » du corps de joint 30 de manière à maintenir en position l'organe de guidage 4 sur l'organe d'étanchéité 3 par coincement. Par « surface externe » on entend une surface orientée vers le carter 1.

L'organe de guidage 4 présente une surface intérieure 42, sensiblement cylindrique, présentant un diamètre dit intérieur délimitant le second jeu radial J2. Par « surface intérieure », on entend une surface orientée vers l'arbre d'entrée 2.

L'organe d'étanchéité 3 et l'organe de guidage 4 sont réalisés chacun dans une matière amortissante telle qu'une matière plastique élastique.

En cas d'effort radial nul, le premier jeu radial J1 permet de s'affranchir des frottements entre l'organe de guidage 4 et le carter 1. Le second jeu radial J2 permet de s'affranchir des transmissions de bruits et de vibrations élevées entre l'organe de guidage 4 et l'arbre d'entrée 2.

En cas de faible effort radial, le second jeu radial J2 devient nul et la dimension radiale de l'épaulement annulaire 40 de l'organe de guidage 4 est choisie de sorte que le premier jeu radial J1 soit non nul. Un tel premier jeu radial J1 non nul permet de s'affranchir des frottements entre l'organe de guidage 4 et le carter 1. La transmission d'effort radial de l'arbre d'entrée 2 vers le carter 1 s'effectue alors par l'intermédiaire de l'organe d'étanchéité 3. L'organe d'étanchéité 3 réalisé dans une matière amortissante permet d'absorber une partie des vibrations transmises au carter 1 par l'arbre d'entrée 2.

En cas de fort effort radial, le premier jeu radial J1 et le second jeu radial J2 deviennent nuls. La transmission d'effort radial de l'arbre d'entrée 2 vers le carter 1 s'effectue à la fois par l'organe de guidage 4 et l'organe d'étanchéité 3. L'organe de guidage 4 réalisé dans une matière amortissante permet d'absorber une partie des vibrations transmises au carter 1 par l'arbre d'entrée 2. La répartition de l'effort radial sur l'organe de guidage 4 et sur l'organe d'étanchéité 3 permet de réduire notablement le risque de déformation permanente de l'organe d'étanchéité 3.

Bien entendu, le mode de réalisation de l'invention décrit ci-dessus ne présente aucun caractère limitatif. Des détails et améliorations peuvent y être apportés dans d'autres variantes d'exécution sans pour autant sortir du cadre de l'invention tel que définit par les revendications qui suivent.

## Revendications

1. Ensemble pour un système de direction d'un véhicule, notamment de type direction assistée électrique, l'ensemble comportant :
- un carter (1) présentant au moins une ouverture (10),
- un arbre d'entrée (2) monté rotatif sur le carter (1), et présentant une partie dite externe (20) destinée à recevoir une colonne de direction et une partie dite interne (21) engagée dans le carter (1) à travers l'ouverture (10) du carter (1),
- un organe d'étanchéité (3) monté en contact autour de la partie interne (21) de l'arbre d'entrée (2) et en contact avec le carter (1) de manière à assurer l'étanchéité de l'ouverture (10) du carter (1),
- un organe de guidage (4) en rotation de l'arbre d'entrée (2) situé à l'intérieur du carter (1),
**caractérisé en ce que** l'organe de guidage (4) est monté solidaire de l'organe d'étanchéité (3), et **en ce que** l'organe de guidage (4) est conformé pour délimiter un premier jeu radial (J1) avec le carter (1) et un second jeu radial (J2) avec l'arbre d'entrée (2).

2. Ensemble selon la revendication 1, **caractérisé en ce que** l'organe de guidage (4) présente au moins un épaulement annulaire (40) venant en appui sur l'organe d'étanchéité (3), l'épaulement annulaire (40) présentant une dimension radiale délimitant le premier jeu radial (J1).

3. Ensemble selon la revendication 1 ou 2, **caractérisé en ce que** l'organe de guidage (4) est annulaire, et **en ce que** l'organe de guidage (4) présente un diamètre intérieur délimitant le second jeu radial (J2).

4. Ensemble selon l'une des revendications 1 à 3, **caractérisé en ce que** l'organe d'étanchéité (3) comporte :
- un corps de joint (30) monté en contact contre le carter (1),
- au moins une lèvre d'étanchéité (31) montée en contact autour de la partie interne (21) de l'arbre d'entrée (2),
et **en ce que** l'organe de guidage (4) est monté sur le corps de joint (30).

5. Ensemble selon l'une des revendications 1 à 4, **caractérisé en ce que** l'organe de guidage (4) est réalisé dans une matière amortissante, de préférence une matière plastique élastique.

6. Ensemble selon l'une des revendications 1 à 5, **caractérisé en ce que** l'organe d'étanchéité (3) est réalisé dans une matière amortissante, de préférence une matière plastique élastique.

## Patentansprüche

1. Einheit für ein Lenksystem eines Fahrzeugs, insbesondere vom Typ elektrische Servolenkung, wobei die Einheit umfasst:
- ein Gehäuse (1), das mindestens eine Öffnung (10) aufweist,
- eine Eingangswelle (2), die rotierend auf dem Gehäuse (1) montiert ist und einen Außenabschnitt (20) aufweist, der zur Aufnahme einer Lenksäule bestimmt ist, und einen Innenabschnitt (21), der durch die Öffnung (10) des Gehäuses (1) in das Gehäuse (1) eingeführt ist,
- ein Dichtungsorgan (3), das im Kontakt um den Innenabschnitt (21) der Eingangswelle (2) und im Kontakt mit dem Gehäuse (1) derart montiert ist, dass die Dichtigkeit der Öffnung (10) des Gehäuses (1) gesichert ist,
- ein Rotations-Führungsorgan (4) der Eingangswelle (2), das sich im Gehäuse (1) befindet,
**dadurch gekennzeichnet, dass** das Führungsorgan (4) mit dem Dichtungsorgan (3) verbunden montiert ist und dass das Führungsorgan (4) ausgebildet ist, um ein erstes radiales Spiel (J1) mit dem Gehäuse (1) und ein zweites radiales Spiel (J2) mit der Eingangswelle (2) zu begrenzen.

2. Einheit nach Anspruch 1 , **dadurch gekennzeichnet, dass** das Führungsorgan (4) mindestens einen ringförmigen Absatz (40) aufweist, der sich auf dem Dichtungsorgan (3) abstützt, wobei der ringförmige Absatz (40) eine radiale Größe hat, die das erste radiale Spiel (J1) begrenzt.

3. Einheit nach Anspruch 1 oder 2, **dadurch gekennzeichnet, dass** das Führungsorgan (4) ringförmig ist und dass das Führungsorgan (4) einen Innendurchmesser aufweist, der das zweite radiale Spiel (J2) begrenzt.

4. Einheit nach einem der Ansprüche 1 bis 3, **dadurch gekennzeichnet, dass** das Dichtungsorgan (3) aufweist:
- einen Dichtungskörper (30), der im Kontakt mit dem Gehäuse (1) montiert ist,
- mindestens eine Dichtungslippe (31), die im Kontakt um den Innenabschnitt (21) der Eingangswelle (2) montiert ist,
und dass das Führungsorgan (4) auf dem Dichtungskörper (30) montiert ist.

5. Einheit nach einem der Ansprüche 1 bis 4, **dadurch gekennzeichnet, dass** das Führungsorgan (4) aus einem dämpfenden Material, vorzugsweise einem elastischen Kunststoff, hergestellt ist.

6. Einheit nach einem der Ansprüche 1 bis 5, **dadurch gekennzeichnet, dass** das Dichtungsorgan (3) aus einem dämpfenden Material, vorzugsweise einem elastischen Kunststoff, hergestellt ist.

## Claims

1. An assembly for a motor vehicle steering system, in particular of the electric power steering type, the assembly including:
- a case (1) having at least one opening (10),
- an input shaft (2) rotatably mounted on the case (1), and having a so-called outer part (20) designed to receive a steering column and a so-called inner part (21) engaged in the case (1) through the opening (10) of the case (1),
- a sealing member (3) mounted in contact around the inner part (21) of the input shaft (2) and in contact with the case (1) so as to ensure the sealing of the opening (10) of the case (1),
- a member (4) for guiding the rotation of the input shaft (2) situated inside the case (1),
**characterized in that** the guide member (4) is mounted secured to the sealing member (3), and **in that** the guide member (4) is configured to define a first radial play (J1) with the case (1) and a second radial play (J2) with the input shaft (2).

2. The assembly according to claim 1, **characterized in that** the guide member (4) has at least one annular shoulder (40) bearing on the sealing member (3), the annular shoulder (40) having a radial dimension defining the first radial play (J1).

3. The assembly according to claim 1 or 2, **characterized in that** the guide member (4) is annular, and **in that** the guide member (4) has an inner diameter defining the second radial play (J2).

4. The assembly according to one of claims 1 to 3, **characterized in that** the sealing member (3) includes:
- a seal body (30) mounted in contact against the case (1),
- at least one sealing lip (31) mounted in contact around the inner part (21) of the drive shaft (2),
and **in that** the guide member (4) is mounted on the seal body (30).

5. The assembly according to one of claims 1 to 4, **characterized in that** the guide member (4) is made from a damping material, preferably an elastic plastic material.

6. The assembly according to one of claims 1 to 5, **characterized in that** the sealing member (3) is made from a damping material, preferably an elastic plastic material.
